# EUROPEAN PATENT SPECIFICATION

(11) **EP 1 271 902 B1**
(45) Date of publication and mention of the grant of the patent: **07.03.2018**
(21) Application number: 02710387.8
(22) Date of filing: 30.01.2002
(51) Int. Cl.: H04M 1/2745, H04M 1/57, H04M 1/677, H04M 1/725, H04W 12/12, H04W 88/02, H04L 29/06, H04M 3/42, H04W 12/08

(54) **METHOD AND DEVICE FOR LIMITING CALL ACCOMPANYING EXECUTION OF APPLICATION**
VERFAHREN UND EINRICHTUNG ZUR BEGRENZUNG DER VERBINDUNGSBEGLEITENDEN AUSFÜHRUNG EINER ANWENDUNG
PROCEDE ET DISPOSITIF DE LIMITATION DE L'EXECUTION D'UNE APPLICATION ACCOMPAGNANT UN APPEL

(30) Priority: 31.01.2001 JP 2001024737
(43) Date of publication of application: 02.01.2003
(73) Proprietor: NTT DoCoMo, Inc., Tokyo 100-6150 (JP)
(72) Inventor: YAMADA, Kazuhiro, Yokohama-shi, Kanagawa 232-0066 (JP); WAKABAYASHI, Tatsuaki, Yokohama-shi, Kanagawa 241-0023 (JP); KAMIYA, Dai, Ichikawa-shi, Chiba 272-0115 (JP)
(74) Representative: Hoffmann Eitle
(86) International application number: PCT/JP2002/000698
(87) International publication number: WO 2002/062044

(56) References cited:
- EP-A- 0 896 486
- EP-A- 1 054 542
- WO-A-99/30521
- JP-A- 1 273 468
- JP-A- 2 148 950
- JP-A- 6 164 714
- JP-A- 6 291 835
- JP-A- 7 015 554
- JP-A- 2000 332 818
- JP-A- 2001 036 636
- JP-U- 3 028 853

## Description

### Technical Field

The present invention relates to a method and an apparatus for limiting call originations accompanied by executing an application at a communication terminal.

### Background Art

Advancement of portable telephones is accelerating. Recently, it is possible to access servers on the Internet through a portable telephone to download a variety of contents and applications. Such applications that are downloaded from a network and used include, for example, an application called "Java Applet" described in the Java (registered trademark) programming language.

Open networks, including the Internet, generally have poor security, and hence, Java Applets distributed through such an open network are not necessarily reliable.

Accordingly, it is necessary to exclude accesses to networks established by an illegal Java Applet. In response to this demand, there has been proposed an access limiting technique called "sandbox model." The sandbox model allows communication terminals, which perform as clients, to access only a server from which a Java Applet is downloaded.

However, it is anticipated that network resources will be further integrated or distributed in the future. In such situations, some cases are likely to happen where applying the existing access limiting technique mentioned above is not adequate.

The prior art further includes the following documents.

EP 1 054 542 relates to a communication apparatus and method for preventing transmission to a particular number by checking a communication destination on a transmission side. In one embodiment, if a line number does not match with any number in a look-up list, the user is notified of this and can determine whether or not communication should be continued.

EP 0 896 486 relates to a wireless terminal for preventing a thief of a wireless terminal from using the stolen wireless terminal to steal wireless service. In one embodiment, a PIN must be entered before a call is established to some telephone numbers.

WO 99/30521 relates to the protection of mobile terminals from fraudulent use, when the mobile terminal is possessed by an unauthorized third party. In one embodiment, telephone numbers are preselected by a user and comprise the only numbers which the user may access without the entry of some type of access code.

### Disclosure of Invention

Accordingly, it is an object of the present invention to propose a new mechanism for limiting network accesses gained by executing applications on a communication terminal.

To this end, the present invention is defined in the independent claims. Particular embodiments are defined in the dependent claims.

According to one aspect, when a call origination of a predetermined communication node is accompanied by executing an application, it is determined whether the call origination should be granted or not by checking the telephone number of the communication node to be one of the telephone numbers that have been granted in advance. This permits improved security to be achieved.

The present invention can be implemented also in a form wherein a carrying out program for the call origination limiting method defined in claim 3 is distributed to a user through a telecommunication line, or in a form wherein such a program stored in a computer-readable medium is distributed to a user.

Furthermore, the present invention can be implemented in a form wherein a communication terminal for carrying out the method for limiting call origination explained above is manufactured and marketed.

An example of the communication terminal is a portable telephone performing radio communication.

### Brief Description of the Drawings

Fig. 1 is a block diagram showing an entire system configuration in accordance with an embodiment of the present invention.
Fig. 2 is a block diagram showing a hardware configuration of a portable telephone in the embodiment.
Fig. 3 is a diagram showing an example of a history of outgoing/incoming calls stored in the portable telephone in the embodiment.
Fig. 4 is a diagram showing an example of telephone directory data stored in the portable telephone in the embodiment.
Fig. 5 is a schematic diagram showing a software configuration of the portable telephone in the embodiment.
Fig. 6 is a flowchart showing a processing operation performed when a Java virtual machine of the portable telephone in the embodiment executes a downloaded Java application.

### Best Mode for Carrying Out the Invention

Referring to the drawings, an embodiment will be described in accordance with the present invention as follows:
In this embodiment, an example will be explained in which a portable telephone for radio data communication executes an application described with Java (registered trademark) programming language (hereinafter referred to as "Java application"). The present invention, however, can be implemented in various modifications within the scope of the claims, rather than being limited to the embodiment.

### A: Configuration

First, the configuration of the embodiment will be explained.

### (1) Configuration of the entire system

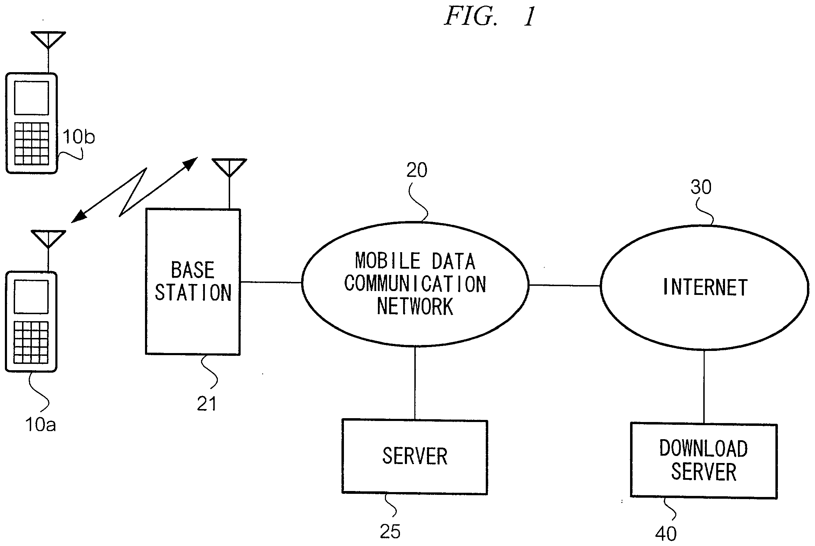

Fig. 1 is a block diagram showing the configuration of the entire system according to the embodiment of the present invention. As shown in the drawing, the system is constructed of portable telephones 10a and 10b, a mobile data communication network 20, a server 25, the Internet 30, and a download server 40.

The portable telephones 10a and 10b are owned by users to receive call services of a mobile telephone network, which is not shown, and to perform radio communication with a base station 21 of the mobile data communication network 20 to receive data communication service of the network 20. The portable telephones 10a and 10b incorporate a browser for browsing various pages on the Internet 30 and a Java virtual machine for supporting Java (registered trademark), which allows various Java applications to be executed.

The portable telephones 10a and 10b share the same configurations and operations, so they shall be generically referred to as a portable telephone 10 hereinafter unless it is necessary to distinguish them in explanation.

The mobile data communication network 20 is constituted of base station 21, switching office, which is not shown, and communication lines for connecting them. Multiple base stations 21 are deployed at predetermined intervals in a communication service area of the mobile data communication network 20 to effect radio communication with the portable telephones 10 movably located in respective radio cells. The mobile data communication network 20 is connected to the Internet 30 through a gateway, which is not shown, and two-way data transfer is possible between the networks.

The download server 40 holds data in an HTML (Hypertext Markup Language) format that can be referred by using the browser of the portable telephone 10, and various types of Java applications, and provides them to the portable telephone 10 through the intermediary of the Internet 30 and the mobile data communication network 20.

Java applications held by the download server 40 include, for example, software for providing PIM (Personal Information Management) to a user of the portable telephone 10 and game software for the user of the portable telephone 10 to play a confrontational game with another user. When these Java applications are downloaded from the download server 40 to the portable telephone 10 and executed by the portable telephone 10, a predetermined communication node is called, and processing is carried out by performing communication with the communication node. There is also a Java application in which, when a user specifies a call destination communication node, a so-called "PhoneTo" function is implemented to call the communication node to effect voice communication.

In this case, as a call destination communication node, there are, for example, server 25, portable telephones 10 other than the portable telephone 10 that executes an application, and fixed telephones, which are not shown.

The server 25 has a function for providing a user with the PIM service. More specifically, the server 25 has a memory area for storing schedules, note pads, etc. of each user, and performs updating or the like of such data in response to requests received from the portable telephone 10 of each user. In this case, the Java application downloaded into the portable telephone 10 is carried out thereby to cause the portable telephone 10 to call the server 25 and perform processing in cooperation with the server 25 to receive the PIM service.

If the Java application downloaded into the portable telephone 10 is a confrontational game to play with another portable telephone 10, then the portable telephone 10a, for example, calls the portable telephone 10b.

Thereafter, communication is carried out between the portable telephones 10a and 10b to execute the Java application.

Thus, a Java application is executed on the portable telephone 10 so as to connect a line by calling a predetermined communication node and to execute a processing (including voice communication processing) by performing communication with the communication node.

However, when the presence of an illegal application mentioned above is taken into account, it is not desirable to allow a call origination processing based on a instruction of Java applications without limitation.

For this reason, the embodiment imposes a certain limitation on a call origination processing accompanied by executing a Java application.

### (2) Hardware configuration of portable telephone 10

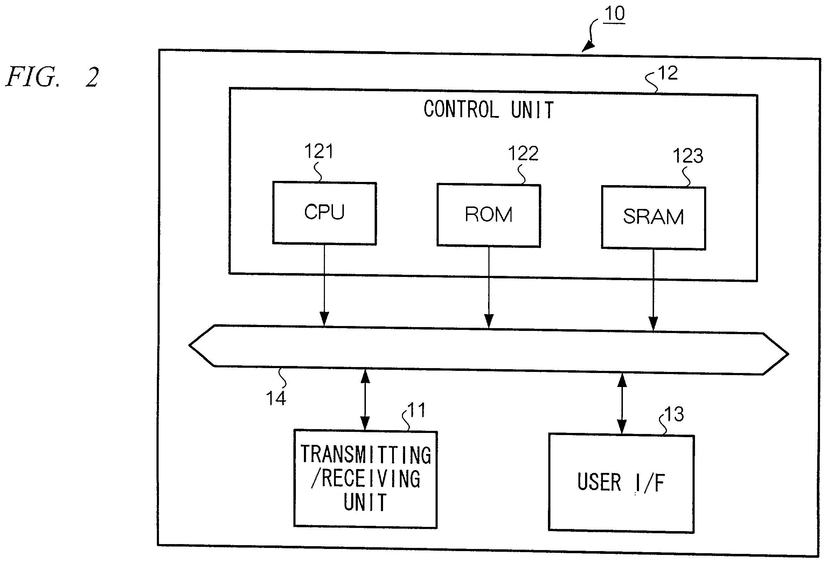

Referring now to the block diagram shown in Fig. 2, the hardware configuration of the portable telephone 10 will be described.

As shown in the drawing, the portable telephone 10 is constructed of a transmitting/receiving unit 11, a control unit 12, a user interface unit 13, and a bus 14 interconnecting them.

The transmitting/receiving unit 11 is constituted of an antenna and a communication control circuit, which are not shown, and performs radio communication with the base stations 21 of the mobile data communication network 20.

The user interface unit 13 is constructed of a liquid crystal display for displaying various types of information, a key pad for a user to perform various types of input operations, and a microphone with a speaker for telephone calls of the user.

The control unit 12 controls each part of the portable telephone 10, and is constructed of a CPU 121, a ROM 122, and an SRAM 123.

Various control programs or the like are stored in the ROM 122, and the CPU 121 reads out the control programs to execute various types of control processing. Control programs in the ROM 122 include an operating system provided in the portable telephone 10, a browser, and various types of software, which will be discussed hereinafter.

The SRAM 123 is used as a work area of the CPU 121, and also stores Java applications downloaded from the download server 40, the history of outgoing/incoming calls of the portable telephone 10, and telephone directory data entered by a user.

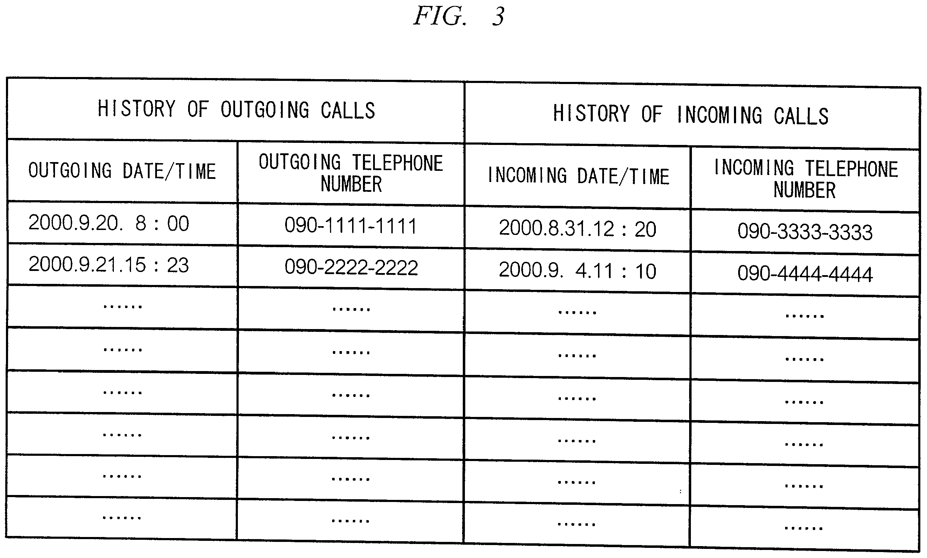

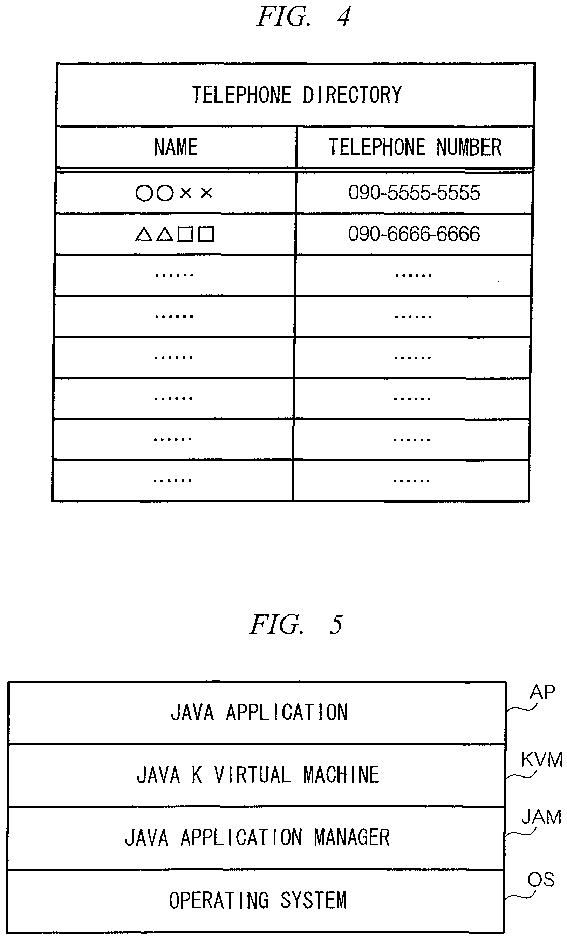

Fig. 3 is a diagram showing an example of the history of outgoing/incoming calls stored in the SRAM 123, and Fig. 4 is a diagram showing an example the telephone directory data stored in the SRAM 123.

As shown in Fig. 3, the history of outgoing calls is stored with date and time when the portable telephone 10 made each call, associated with the telephone number of the communication node from which the telephone call was made (the originating telephone number). Similarly, the history of incoming calls is stored with date and time when the portable telephone 10 received each call, associated with the telephone number of the communication node from which the telephone call, corresponding to the received call, was made (the incoming telephone number).

Furthermore, the telephone directory data is stored with interrelated names and telephone numbers, as shown in Fig. 4.

As for a processing for storing of histories of outgoing and incoming calls, well-known arts shall be applied and the explanation thereof will be omitted.

### (3) Software configuration of portable telephone

The software configuration of the portable telephone 10 will now be described.

Fig. 5 is a schematic diagram showing the software configuration of the portable telephone 10. As shown in the drawing, the software of the portable telephone 10 is constituted of an operating system OS, a Java application manager JAM, a Java K virtual machine KVM and a Java application AP in this order from a lowermost layer to an uppermost layer.

The operating system OS is a well-known software installed in a portable telephone to support basic processing of the portable telephone 10.

The Java application manager JAM is software mainly for control and security check on the Java K virtual machine KVM. To be more specific, the Java application manager JAM refers to the aforesaid histories of outgoing/incoming calls and the telephone directory data and determine whether the call origination processing should be executed or not by checking whether the telephone number of the above communication node is included therein, when a call origination is processed to a predetermined communication node accompanied by executing the Java application AP. The determination is based on an idea: a call origination processing can be granted in such cases that the node communication telephone number of the call origination is included in the histories of outgoing/incoming calls or the telephone directory data, because this means that the portable telephone 10 performed communication with the communication node in the past or the user recognized it as a communication partner.

The Java K virtual machine KVM carries out the Java application under the control of the Java application manager JAM. The Java virtual machine KVM and the Java application manager JAM are incorporated into the operating system OS in advance, and they are all stored in the ROM 122.

The Java application AP is the software described in the Java (registered trademark) programming language as mentioned above, and it is downloaded into the portable telephone 10 from the download server 40, then written to and stored in the SRAM 123.

### B: Operation

The operation of the embodiment with the above configurations will now be explained.

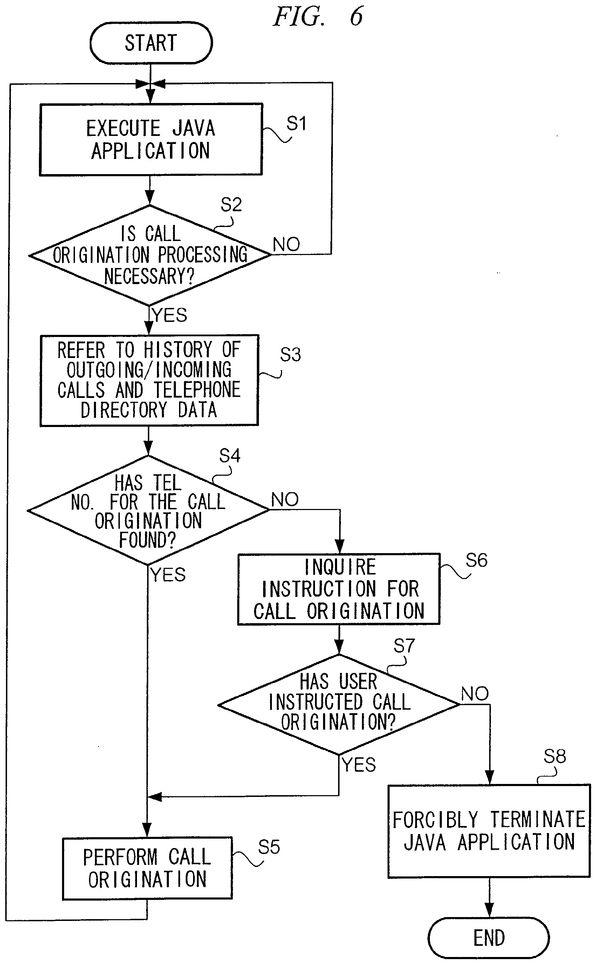

Fig. 6 is a flowchart showing the processing execution of the Java application AP by the portable telephone 10.

When an instruction is issued for starting up a requested Java application AP by user's operation, the Java application AP is started up on the Java K virtual machine KVM shown in Fig. 3 in response to the instruction, and the processing is executed unit by unit which is an execution unit called "class" (step S1).

Then, it is determined whether the class to be executed is the processing that requires a call origination or not to a communication node (step S2).

If the class does not require the call origination processing (NO in step S2), then the Java K virtual machine KVM repeats the processing of step S1, and executes the processing corresponds to the class.

If the class requires the call origination processing (YES in step S2), then the Java application manager JAM refers to the telephone number of the communication node, for which the call origination processing is to be implemented, the histories of outgoing/incoming calls and the telephone directory data and compares them in response to a request from the Java K virtual machine KVM (step S3).

If a comparison result indicates that the same telephone number as that of the communication node for which the call origination processing is to be implemented has been found in the histories of outgoing/incoming calls or the telephone directory data (YES in step S4), then the Java application manager JAM determines that the call origination processing has been granted and instructs that the Java K virtual machine KVM to execute the call origination processing (step S5).

If no telephone number, which is identical to that of the communication node for which the call origination processing is to be carried out, is found in the histories of outgoing/incoming calls and the telephone directory data (NO in step S4), then it is determined that the call origination processing has not been granted. The Java application manager JAM instructs the Java K virtual machine KVM to display a message on a liquid crystal display, indicating that the call origination processing cannot be granted, together with another message indicating that user's instruction is necessary to perform call origination (step S6).

The displayed in this case can be a message, for example, " You need to call oo-xxxx-ΔΔΔΔ to continue the processing. Are you making the call? Press key 1 for YES or press key 2 for NO."

If the user issues an instruction for making the call (YES in step S7), then the processing comes to step S5 wherein the Java K virtual machine KVM carries out the call origination processing. Then, the processing returns to step S1 wherein the processing for executing the Java application AP is continued.

In this case, a call origination is made in the step S5 processing so that the telephone number used for making the call is stored in the history of outgoing calls. Hence, the call origination processing will be granted thereafter concerning this telephone number by step S4 determination above mentioned.

If an instruction is issued by the user not to make the call (NO in step S7), then the Java application AP is forcibly terminated by the Java application manager JAM in response to the instruction (step S8).

In this way, a call origination is granted only if the result indicates conformity after the comparison of the communication node telephone number to be implemented for the call origination with the histories of outgoing/incoming calls and the telephone directory data.

That is to say, in this embodiment, call originations are limited to the communication nodes called before or the communication nodes registered in the telephone directory by the user to ensure the security thereby.

### C: Modification examples

As previously mentioned, the present invention is not limited to the embodiment described above, and may be implemented in various modifications as shown below.

### (1) Form of each communication node

In the embodiment described above, the portable telephone 10 has been used as the subject executing applications. The subject executing applications, however, is not limited thereto; it may be a fixed telephone or a personal computer connected to a portable telephone or a fixed telephone.

A communication node to be called is not limited to the server 25 or the portable telephone 10; it may be a personal computer or the like connected to a fixed network and placed at home or in an office.

Thus, the subjects executing the applications and the objects to be called are not limited as long as they are communication nodes to which lines are connected by using telephone numbers to perform data communication or voice communication.

### (2) The use of the histories of outgoing/incoming calls and telephone directory data

In the embodiment, both the histories of outgoing/incoming calls and the telephone directory data have been used to determine whether the call origination processing should be granted or not; however, the present invention is not limited thereto. Alternatively, whether call origination processing should be granted may be determined by using only the history of outgoing calls, only the history of incoming calls, or only the telephone directory data, or by using at least two of them.

### (3) Processing for different applications

In the embodiment, even when a plurality of Java applications AP have been installed in the portable telephone 10, it has been determined whether call origination should be implemented by using all the histories of outgoing/incoming calls and the telephone director data without awareness of differences among applications, when any of the Java applications AP is carried out; however, the present invention is not limited thereto. Alternatively, data on which the determination is based may be limited for each application AP to be executed.

For instance, for the first Java application only the telephone directory data may be the foundation on which determination is based, for the second Java application both histories of outgoing/incoming calls and telephone directory data may be the foundation on which determination is based, and for the third Java application, without providing any foundation on which determination is based, calls to all communication nodes may be granted.

As for this occasion users may determine every time which data shall be the determination foundation, or the Java application manager JAM may determine according to attributes of a Java application AP.

Java applications AP are not necessarily limited to those downloaded from a network. For example, some Java applications AP are stored in the ROM 122 in advance. Such Java Applications AP are considered to be with high security and no limitation may be put on the call originations. Applications which have not been downloaded from a network are however not within the scope of the claims and are therefore discussed here for the sake of illustration only. Furthermore, Java applications AP that are downloaded from the download server 40 authenticated by predetermined certificate authorities may be expected to provide respectable security. Hence, both the histories of outgoing/incoming calls and the telephone directory data may be used as the foundations on which determinations are based to ease the restrictions on call origination. Security may not be expected much for Java applications AP downloaded from download server 40 that are not authenticated by predetermined certificate authorities. Hence, only a telephone directory data history may be used as the foundation on which determinations are based enhancing restrictions on call origination.

### (4) Programming language

In the embodiment, the Java (registered trademark) has been used; the present invention, however, is not limited thereto. It is needless to say that other programming languages may be used.

## Claims

1. A communication terminal (10) comprising:
a transmitting/receiving unit (11) constituted of an antenna and a communication control circuit and configured to perform radio communication with base stations (21) of a mobile data communication network (20); and
a downloading means configured to download a Java application from a download server (40), using the transmitting/receiving unit (11);
a SRAM (123) configured to store the downloaded Java application, a history of outgoing calls comprising telephone numbers of communication nodes called by the communication terminal (10), a history of incoming calls comprising telephone numbers of communication nodes from which calls were received by the communication terminal (10), and telephone directory data;
a ROM (122) configured to store software providing an execution environment for the downloaded Java application, the software including an operating system, a Java application manager, and a Java K virtual machine;
wherein the Java K virtual machine is configured to process the downloaded Java application, the processing of the Java application being executed execution unit by execution unit, and wherein the Java K virtual machine is further configured to, before an execution unit in the processing of the Java application is executed, determine whether the execution of the execution unit requires a call origination to a communication node by the transmitting/receiving unit (11), and
if it is determined, by the Java K virtual machine, that the call origination is required, the Java application manager is configured to select, according to an attribute of the downloaded Java application, one or more of the history of outgoing calls, the history of incoming calls and the telephone directory data as a selected specific group of telephone numbers, and to determine whether a telephone number of the communication node is registered in the selected specific group of telephone numbers,
if it is determined, by the Java application manager, that the telephone number of the communication node is registered in the selected specific group of telephone numbers, the Java application manager is further configured to determine that the call origination is granted and instruct the Java K virtual machine to execute the execution unit requiring the call origination,
if it is determined, by the Java application manager, that the telephone number of the communication node is not registered in the selected specific group of telephone numbers, the Java application manager is further configured to determine that the call origination is not granted and instruct the Java virtual K machine to display a message on a liquid crystal display of the communication terminal (10) indicating that the call origination cannot be granted, together with another message indicating that a user's instruction is necessary to perform the call origination.

2. The communication terminal (10) according to claim 1, wherein the attribute of the downloaded Java application defines whether the download server (40) from which the Java application is downloaded is a server (40) authenticated by predetermined certificate authorities.

3. A call origination limiting method carried out in a communication terminal (10), said communication terminal (10) comprising: a transmitting/receiving unit (11) constituted of an antenna and a communication control circuit and configured to perform radio communication with base stations (21) of a mobile data communication network (20); a downloading means configured to download a Java application from a download server (40), using the transmitting/receiving unit (11); a SRAM (123) configured to store the downloaded Java application, a history of outgoing calls comprising telephone numbers of communication nodes called by the communication terminal (10), a history of incoming calls comprising telephone numbers of communication nodes from which calls were received by the communication terminal (10), and telephone directory data; and a ROM (122) configured to store software providing an execution environment for a Java application, the software including an operating system, a Java application manager, and a Java K virtual machine, wherein the Java K virtual machine is configured to process the downloaded Java application, the processing of the Java application being executed execution unit by execution unit,
the method comprising:
downloading, by the download means, the Java application from the download server (40), using the transmitting/receiving unit (11);
before an execution unit in the processing of the Java application is executed, determining, by the Java K virtual machine, whether the execution of the execution unit requires a call origination to a communication node by the transmitting/receiving unit (11);
if it is determined, by the Java K virtual machine, that the call origination is required, selecting, by the Java application manager, according to an attribute of the downloaded Java application, one or more of the history of outgoing calls, the history of incoming calls and the telephone directory data as a selected specific group of telephone numbers, and determining by the Java application manager, whether a telephone number of the communication node is registered in the selected specific group of telephone numbers,
if it is determined, by the Java application manager, that the telephone number of the communication node is registered in the selected specific group of telephone numbers, determining by the Java application manager, that the call origination is granted and instructs the Java K virtual machine to execute the execution unit requiring the call origination;
if it is determined, by the Java application manager, that the telephone number of the communication node is not registered in the selected specific group of telephone numbers, determining by the Java application manager, that the call origination is not granted and instructs the Java virtual K machine to display a message on a liquid crystal display of the communication terminal (10) indicating that the call origination cannot be granted, together with another message indicating that a user's instruction is necessary to perform the call origination.

4. A computer program comprising computer program code means adapted to perform all the steps of the method of claim 3, when said program is run on a computer that controls a communication terminal (10).

5. A computer program as claimed in claim 4 embodied on a computer-readable storage medium.

## Patentansprüche

1. Kommunikationsendgerät (10), umfassend:
eine Sende-/Empfangseinheit (11) gebildet aus einer Antenne und einem Kommunikationssteuerungsschaltkreis und konfiguriert, Funkkommunikation mit Basisstationen (21) eines mobilen Datenkommunikationsnetzwerks (20) durchzuführen; und
ein Downloadmittel, konfiguriert, von einem Downloadserver (40) unter Verwendung der Sende-/Empfangseinheit (11) eine Java-Anwendung herunterzuladen;
einen SRAM (123),
konfiguriert, die heruntergeladene Java Anwendung, ein Verzeichnis ausgehender Anrufe umfassend Telefonnummern von Kommunikationsknoten, die von dem Kommunikationsendgerät (10) angerufen wurden, ein Verzeichnis eingehender Anrufe umfassend Telefonnummern von Kommunikationsknoten, von denen Anrufe vom Kommunikationsendgerät (10) empfangen wurden und Telefonbuchdaten zu speichern;
einen ROM (122),
konfiguriert, Software, die eine Ausführungsumgebung für die heruntergeladene Java-Anwendung bereitstellt, zu speichern, wobei die Software ein Betriebssystem, einen Java-Anwendungsmanager und eine virtuelle Java K-Maschine aufweist;
wobei die virtuelle Java K-Maschine konfiguriert ist, die heruntergeladene Java-Anwendung zu verarbeiten, wobei die Verarbeitung der Java-Anwendung von einer Ausführungseinheit nach der anderen ausgeführt wird, und wobei die virtuelle Java K-Maschine weiter konfiguriert ist, bevor eine Ausführungseinheit während der Verarbeitung der Java-Anwendung ausgeführt wird, zu bestimmen, ob die Ausführung der Ausführungseinheit einen Verbindungsaufbau zu einem Kommunikationsknoten durch die Sende-/Empfangseinheit (11) erfordert, und
falls von der virtuellen Java K-Maschine festgestellt wird, dass der Verbindungsaufbau erfordert wird, wird der Java-Anwendungsmanager konfiguriert, gemäß einem Attribut der heruntergeladenen Java-Anwendung, ein oder mehrere des Verzeichnisses ausgehender Anrufe, des Verzeichnisses eingehender Anrufe und der Telefonbuchdaten als eine ausgewählte, spezifische Gruppe von Telefonnummern auszuwählen und festzulegen, ob eine Telefonnummer des Kommunikationsknotens in der ausgewählten, spezifischen Gruppe von Telefonnummern registriert ist,
falls vom Java-Anwendungsmanager festgestellt wird, dass die Telefonnummer des Kommunikationsknotens in der ausgewählten, spezifischen Gruppe von Telefonnummern registriert ist, wird der Java Anwendungsmanager weiter konfiguriert, festzulegen, dass der Verbindungsaufbau gewährt wird, und die virtuelle Java K-Maschine anzuweisen, die Ausführungseinheit, die den Verbindungsaufbau erfordert, auszuführen,
falls vom Java-Anwendungsmanager festgestellt wird, dass die Telefonnummer des Kommunikationsknotens nicht in der ausgewählten, spezifischen Gruppe von Telefonnummern registriert ist, wird der Java-Anwendungsmanager weiter konfiguriert festzulegen, dass der Verbindungsaufbau nicht gewährt wird, und die virtuelle Java K-Maschine anzuweisen eine Nachricht auf einer Flüssigkristallanzeige des Kommunikationsendgeräts (10) anzuzeigen, dass der Verbindungsaufbau nicht gewährt werden konnte, zusammen mit einer anderen Nachricht, die anzeigt, dass ein Befehl eines Nutzer notwendig ist, um den Verbindungsaufbau durchzuführen.

2. Kommunikationsendgerät (10) nach Anspruch 1, wobei das Attribut der heruntergeladenen Java-Anwendung festlegt, ob der Downloadserver (40), von dem die Java-Anwendung heruntergeladen wurde, ein Server (40) ist, der von vorgegebenen Zertifizierungsstellen authentifiziert wurde.

3. Verfahren zur Verbindungsaufbaubegrenzung, ausgeführt in einem Kommunikationsendgerät (10), wobei das Kommunikationsendgerät (10) umfasst: eine Sende-/Empfangseinheit (11) gebildet aus einer Antenne und einem Kommunikationssteuerungsschaltkreis und konfiguriert, Funkkommunikation mit Basisstationen (21) eines mobilen Datenkommunikationsnetzwerks (20) durchzuführen; ein Downloadmittel, konfiguriert, von einem Downloadserver (40) unter Verwendung der Sende-/Empfangseinheit (11) eine Java-Anwendung herunterzuladen; einen SRAM (123)
konfiguriert, die heruntergeladene Java-Anwendung, ein Verzeichnis ausgehender Anrufe umfassend Telefonnummern von Kommunikationsknoten, die von dem Kommunikationsendgerät (10) angerufen wurden, ein Verzeichnis eingehender Anrufe umfassend Telefonnummern von Kommunikationsknoten, von denen Anrufe vom Kommunikationsendgerät (10) empfangen wurden und Telefonbuchdaten zu speichern; und einen ROM (122)
konfiguriert,
Software, die eine Ausführungsumgebung für eine Java-Anwendung bereitstellt zu speichern, wobei die Software ein Betriebssystem, einen Java-Anwendungsmanager und eine virtuelle Java K-Maschine aufweist, wobei die virtuelle Java K-Maschine konfiguriert ist, die heruntergeladene Java-Anwendung zu verarbeiten, wobei die Verarbeitung der Java-Anwendung von einer Ausführungseinheit ausgeführt wird,
das Verfahren umfassend:
Herunterladen, mittels des Downloadmittels, der Java-Anwendung vom Downloadserver (40), unter Verwendung der Sende-/Empfangseinheit (11);
bevor eine Ausführungseinheit während der Verarbeitung der Java-Anwendung ausgeführt wird, Bestimmen, durch die virtuelle Java K-Maschine, ob die Ausführung der Ausführungseinheit einen Verbindungsaufbau zu einem Kommunikationsknoten durch die Sende-/Empfangseinheit (11) erfordert;
falls von der virtuellen Java K-Maschine festgestellt wird, dass der Verbindungsaufbau erfordert wird, Auswählen, durch den Java-Anwendungsmanager, von einem oder mehreren des Verzeichnisses ausgehender Anrufe, des Verzeichnisses eingehender Anrufe und der Telefonbuchdaten als eine ausgewählte, spezifische Gruppe von Telefonnummern, und Festlegen durch den Java-Anwendungsmanager, ob eine Telefonnummer des Kommunikationsknotens in der ausgewählten, spezifischen Gruppe von Telefonnummern registriert wird,
falls vom Java-Anwendungsmanager festgestellt wird, dass die Telefonnummer des Kommunikationsknotens in der ausgewählten, spezifischen Gruppe von Telefonnummern registriert ist, Festlegen, durch den Java-Anwendungsmanager dass der Verbindungsaufbau gewährt wird und Anweisen der virtuellen Java K-Maschine, die Ausführungseinheit, die den Verbindungsaufbau verlangt, auszuführen,
falls vom Java-Anwendungsmanager festgestellt wird, dass die Telefonnummer des Kommunikationsknotens nicht in der ausgewählten, spezifischen Gruppe von Telefonnummern registriert ist, Festlegen, durch den Java-Anwendungsmanager, dass der Verbindungsaufbau nicht gewährt wird und Anweisen der virtuellen Java K-Maschine, eine Nachricht auf einer Flüssigkristallanzeige des Kommunikationsendgeräts (10) anzuzeigen, dass der Verbindungsaufbau nicht gewährt werden konnte, zusammen mit einer anderen Nachricht, die anzeigt, dass ein Befehl eines Nutzer notwendig ist, um den Verbindungsaufbau durchzuführen.

4. Computerprogramm, umfassend Computerprogrammcodemittel, die angepasst sind, alle Schritte des Verfahrens nach Anspruch 3 auszuführen, wenn das Programm auf einem Computer ausgeführt wird, der ein Kommunikationsendgerät (10) steuert.

5. Computerprogramm nach Anspruch 4, verkörpert auf einem computerlesbaren Speichermedium.

## Revendications

1. Terminal de communication (10) comprenant :
une unité de transmission/réception (11) constituée par une antenne et un circuit de commande de communication et configurée pour effectuer une communication radio avec des stations de base (21) d'un réseau de communication de données mobile (20) ; et
un moyen de téléchargement configuré pour télécharger une application Java à partir d'un serveur de téléchargement (40), en utilisant l'unité de transmission/réception (11) ;
une SRAM (123) configurée pour stocker l'application Java téléchargée, un historique d'appels sortants comprenant des numéros de téléphone de noeuds de communication appelés par le terminal de communication (10), un historique d'appels entrants comprenant des numéros de téléphone de noeuds de communication à partir desquels des appels ont été reçus par le terminal de communication (10), et des données de répertoire téléphonique ;
une ROM (122) configurée pour stocker un logiciel fournissant un environnement d'exécution pour l'application Java téléchargée, le logiciel comprenant un système d'exploitation, un gestionnaire d'application Java et une machine virtuelle Java K ;
dans lequel la machine virtuelle Java K est configurée pour traiter l'application Java téléchargée, le traitement de l'application Java étant exécuté unité d'exécution par unité d'exécution, et dans lequel la machine virtuelle Java K est configurée en outre pour, avant qu'une unité d'exécution dans le traitement de l'application Java soit exécutée, déterminer si l'exécution de l'unité d'exécution nécessite un départ d'appel vers un noeud de communication par l'unité de transmission/réception (11), et
s'il est déterminé, par la machine virtuelle Java K, que le départ d'appel est nécessaire, le gestionnaire d'application Java est configuré pour sélectionner, en fonction d'un attribut de l'application Java téléchargée, un ou plusieurs parmi l'historique d'appels sortants, l'historique d'appels entrants et les données de répertoire téléphonique sous la forme d'un groupe spécifique sélectionné de numéros de téléphone, et pour déterminer si un numéro de téléphone du noeud de communication est enregistré dans le groupe spécifique sélectionné de numéros de téléphone,
s'il est déterminé, par le gestionnaire d'application Java, que le numéro de téléphone du noeud de communication est enregistré dans le groupe spécifique sélectionné de numéros de téléphone, le gestionnaire d'application Java est configuré en outre pour déterminer que le départ d'appel est accordé et donner instruction à la machine virtuelle Java K d'exécuter l'unité d'exécution nécessitant le départ d'appel,
s'il est déterminé, par le gestionnaire d'application Java, que le numéro de téléphone du noeud de communication n'est pas enregistré dans le groupe spécifique sélectionné de numéros de téléphone, le gestionnaire d'application Java est configuré en outre pour déterminer que le départ d'appel n'est pas accordé et donner instruction à la machine virtuelle Java K d'afficher un message sur une unité d'affichage à cristaux liquides du terminal de communication (10) indiquant que le départ d'appel ne peut pas être accordé, conjointement à un autre message indiquant qu'une instruction de l'utilisateur est nécessaire pour effectuer le départ d'appel.

2. Terminal de communication (10) selon la revendication 1, dans lequel l'attribut de l'application Java téléchargée définit si le serveur de téléchargement (40) à partir duquel l'application Java est téléchargée est un serveur (40) authentifié par des autorités de certification prédéterminées.

3. Procédé de limitation de départ d'appel exécuté dans un terminal de communication (10), ledit terminal de communication (10) comprenant: une unité de transmission/réception (11) constituée par une antenne et un circuit de commande de communication et configurée pour effectuer une communication radio avec des stations de base (21) d'un réseau de communication de données mobile (20) ; un moyen de téléchargement configuré pour télécharger une application Java à partir d'un serveur de téléchargement (40), en utilisant l'unité de transmission/réception (11) ; une SRAM (123) configurée pour stocker l'application Java téléchargée, un historique d'appels sortants comprenant des numéros de téléphone de noeuds de communication appelés par le terminal de communication (10), un historique d'appels entrants comprenant des numéros de téléphone de noeuds de communication à partir desquels des appels ont été reçus par le terminal de communication (10), et des données de répertoire téléphonique; et une ROM (122) configurée pour stocker un logiciel fournissant un environnement d'exécution pour l'application Java, le logiciel comprenant un système d'exploitation, un gestionnaire d'application Java et une machine virtuelle Java K, dans lequel la machine virtuelle Java K est configurée pour traiter l'application Java téléchargée, le traitement de l'application Java étant exécuté unité d'exécution par unité d'exécution,
le procédé comprenant :
le téléchargement, par le moyen de téléchargement, de l'application Java à partir du serveur de téléchargement (40), en utilisant l'unité de transmission/réception (11) ;
avant qu'une unité d'exécution dans le traitement de l'application Java soit exécutée, la détermination, par la machine virtuelle Java K, que l'exécution de l'unité d'exécution nécessite un départ d'appel vers un noeud de communication par l'unité de transmission/réception (11) ;
s'il est déterminé, par la machine virtuelle Java K, que le départ d'appel est nécessaire, la sélection, par le gestionnaire d'application Java, en fonction d'un attribut de l'application Java téléchargée, d'un ou plusieurs parmi l'historique d'appels sortants, l'historique d'appels entrants et les données de répertoire téléphonique sous la forme d'un groupe spécifique sélectionné de numéros de téléphone, et la détermination, par le gestionnaire d'application Java, qu'un numéro de téléphone du noeud de communication est enregistré dans le groupe spécifique sélectionné de numéros de téléphone,
s'il est déterminé, par le gestionnaire d'application Java, que le numéro de téléphone du noeud de communication est enregistré dans le groupe spécifique sélectionné de numéros de téléphone, la détermination, par le gestionnaire d'application Java, que le départ d'appel est accordé et une instruction à la machine virtuelle Java K d'exécuter l'unité d'exécution nécessitant le départ d'appel ;
s'il est déterminé, par le gestionnaire d'application Java, que le numéro de téléphone du noeud de communication n'est pas enregistré dans le groupe spécifique sélectionné de numéros de téléphone, la détermination, par le gestionnaire d'application Java, que le départ d'appel n'est pas accordé et une instruction à la machine virtuelle Java K d'afficher un message sur une unité d'affichage à cristaux liquides du terminal de communication (10) indiquant que le départ d'appel ne peut pas être accordé, conjointement à un autre message indiquant qu'une instruction de l'utilisateur est nécessaire pour effectuer le départ d'appel.

4. Programme informatique comprenant des moyens de code de programme informatique adaptés pour effectuer toutes les étapes du procédé de la revendication 3, quand ledit programme est exécuté sur un ordinateur qui commande un terminal de communication (10).

5. Programme informatique selon la revendication 4 incorporé sur un support de stockage lisible par ordinateur.
